# EUROPEAN PATENT APPLICATION

(11) **EP 2 787 471 A1**
(43) Date of publication of application: **08.10.2014**
(21) Application number: 13162161.7
(22) Date of filing: 03.04.2013
(51) Int. Cl.: G06Q 10/08

(54) **System for assigning a goods consumer to a goods provider**

(71) Applicant: Deutsche Telekom AG, 53113 Bonn (DE); Technische Universität Berlin, 10623 Berlin (DE)
(72) Inventor: Schmid, Stefan, 10405 Berlin (DE); Feldmann, Anja, 10717 Berlin (DE); Smaragdakis, Georgios, 14052 Berlin (DE)
(74) Representative: Vossius & Partner

(57) **Abstract**

The invention relates to a system for assigning at least one goods consumer to at least one goods provider comprising a data retrieval device, wherein the data retrieval device is configured to gather continuously or in time intervals data from the at least one goods consumer and/or from the at least one goods provider comprising at least one production provider and/or at least one storage provider and/or from at least one parcel provider and/or from at least one transport network provider and/or from at least one intermediate storage provider and/or from at least one meta-information provider; and a ranking engine device, wherein the ranking engine device is configured to rank triples of goods consumer and at least one candidate goods provider and at least one candidate parcel provider or quadruple of goods consumer and at least one candidate goods provider and at least one candidate parcel provider and at least one candidate transport network provider under consideration of the data gathered by the data retrieval device.

The invention also relates to a system for joint optimization of warehouse availability and/or goods availability and/or transport network capacity using a system for assigning at least one goods consumer to at least one goods provider.

## Description

The invention relates to a system for assigning at least one goods consumer to at least one goods provider. Further the invention relates to a system for joint optimization of warehouse availability and/or goods availability and/or transport network capacity.

The field of logistics deals with the transportation of goods, items, resource or the like from a point of origin, e.g. a producer, to a point of destination, e.g. a consumer. Many companies run multiple production and/or storage sites from which they can deliver items to customers using different parcel provider and different transport network provider, e.g. railway or truck-logistic companies.

Nowadays mostly the availability of goods at the goods provider's or storage provider's end is taken into account.

However, besides the availability of items to be delivered, other important factors and parameter necessary for a fast and satisfying transportation are not considered.

In "Price and Delivery Logistics Competition in a Supply Chain", Management Science September 2003 vol. 49 no. 9, p. 1139-1153, Ha et al. consider a supply chain in which two suppliers compete for supply to a customer. Pricing and delivery-frequency decisions in the system are analyzed by two three-stage noncooperative games with different decision rights designated to the parties involved.

In "The cost of a cloud: research problems in data center networks", Newsletter ACM SIGCOMM Computer Communication Review archive, Volume 39 Issue 1, January 2009, Pages 68-73, Greenberg et al. uses data centers to create cloud services representing a significant investment in capital outlay and ongoing costs. Accordingly, Greenberg et al. examine the costs of cloud service data centers today.

The object of the invention is to provide an improved system for assigning at least one goods consumer to at least one goods provider and to provide an improved system for joint optimization of warehouse availability and/or goods availability and/or transport network capacity.

The object of the invention is solved with the features of the independent claims. Dependent claims refer to preferred embodiments.

The invention provides a system for assigning at least one goods consumer to at least one goods provider comprising a data retrieval device, wherein the data retrieval device is configured to gather continuously or in time intervals data from the at least one goods consumer. A goods consumer can be an end-user, e.g. a single person or a private household. The goods consumer can also be a public institution or a small or mid-sized enterprise. The goods consumer can also be a large enterprise or a corporate business group.

The data retrieval device is further configured to gather continuously or in time intervals data from the at least one goods provider. The at least one goods provider comprises at least one production provider and/or at least one storage provider. A production provider can be a producer of goods or an importer of goods or a distributer of goods. A storage provider can have one or more storage facilities for storing goods. The one or more storage facilities can be located in close vicinity to each other, e.g. on a common area or the one or more storage facilities can also be located distant from each other, e.g. in different cities or countries.

The data retrieval device is further configured to gather continuously or in time intervals data from at least one parcel provider and/or from at least one transport network provider and/or from at least one intermediate storage provider. A parcel provider can be a logistics company which can be specialized in transportation and shipment of various goods by ground transportation, air transportation or ship transportation. A transport network provider can be a company that operates and/or maintains a transport network as for example a rail network or a road network or e.g. a water channel. Thus, a transport network provider can be a railway company or a road networks company. An intermediate storage provider can operate and/or maintain a goods storage for intermediate and/or temporary use, e.g. in the cargo area of an airport or in the cargo area of a harbor.

The data retrieval device is further configured to gather continuously or in time intervals data from at least one meta-information provider. Meta-information providers can be weather forecasters, news feeds, news networks or goods information portals and first source exchange information portals, e.g. to check the prices related to transportation, e.g. the prices of fuels. Therefore the data provided by a meta-information provider can be weather information data, traffic information data, news information data or data relating to price of fuels.

The system for assigning at least one goods consumer to at least one goods provider further comprises a ranking engine device, wherein the ranking engine device is configured to rank triples of goods consumer and at least one candidate goods provider and at least one candidate parcel provider under consideration of the data gathered by the data retrieval device. The ranking device is alternatively configured to rank quadruple of goods consumer and at least one candidate goods provider and at least one candidate parcel provider and at least one candidate transport network provider under consideration of the data gathered by the data retrieval device.

According to an embodiment of the invention, the ranking engine device is further configured to send the ranking information to the candidate goods provider and/or candidate parcel provider and/or candidate transport network provider. The ranking information may comprise an ordered list wherein the list comprises matched triples of goods consumer - candidate goods provider - candidate parcel provider. The list may comprise ordered data on which goods consumer or which entity of the goods consumer, which goods provider or which entity of the goods provider as well as which parcel provider or which entity of the parcel provider match together. Preferably, the ranking information may comprise an ordered list wherein the list comprises matched quadruples of goods consumer - candidate goods provider - candidate parcel provider - candidate transport network provider. In case of quadruples the list may comprise ordered data on which goods consumer or which entity of the goods consumer, which goods provider or which entity of the goods provider, which parcel provider or which entity of the parcel provider as well as which transport network provider or which entity of the transport network provider match together.

The candidate goods provider may be a goods provider which is considered by the ranking engine device to be the most suitable to produce, provide, offer and/or having on stock one or more demanded goods desired/ordered by the goods consumer under consideration of the data gathered by the data retrieval device. The candidate parcel provider may be a parcel provider which is considered by the ranking engine device to be the most suitable to deliver and/or ship one or more demanded goods to the goods consumer under consideration of the data gathered by the data retrieval device. The candidate transport network provider may be a transport network provider which is considered by the ranking engine device to have a respective transport capacity, the network not currently being congested or overloaded, and currently not having any significant breakdowns or holdups.

The ranking engine device is further configured to receive the response from the candidate goods provider and/or candidate parcel provider and/or candidate transport network provider, and is further configured to send the confirmation from the candidate goods provider and/or candidate parcel provider and/or candidate transport network provider to a user of the system. In case that the response from first ranked candidate goods provider and/or first ranked candidate parcel provider and/or first ranked candidate transport network provider is negative, the ranking engine device is further configured to send the ranking information to the second ranked candidate goods provider and/or second ranked candidate parcel provider and/or second ranked candidate transport network provider which are second most suitable and to receive respective response. In case of a further negative response, the ranking engine device is configured to subsequently send ranking information to the next ranked candidate goods provider and/or next ranked candidate parcel provider and/or next ranked candidate transport network provider in the ranking information until a positive response (confirmation) is sent back.

The ranking engine is further configured to assign the candidate goods provider and/or candidate parcel provider and/or candidate transport network provider to the at least one goods consumer according to a users selection of the candidate goods provider and/or candidate parcel provider and/or candidate transport network provider based on the ranking information.

According to another embodiment of the invention, the system further comprises a constraints processing engine device configured to retrieve data from a/the system user on at least one constraint and/or one ranking preference and/or one ranking algorithm and configured to submit the data to the ranking engine device.

A constraint may comprise a pre-specified selection of specific candidate goods provider and/or candidate parcel provider and/or candidate transport network provider. This pre-specified selection may be dependent on the time of the day or the year, e.g. certain providers are preferred in the morning or at peak hours or at Christmas time, or other time conditions. Another constraint may depend on the location of the goods consumer, i.e. that the location of the goods consumer falls within a preferred allocated area of a certain parcel provider and/or transport network provider or the location of the goods consumer falls within an area where other goods consumer may order/desire similar goods or order their goods from the same goods provider. Another constraint may comprise at least one of the following: a desired time or date of delivery of the desired/ordered good, a desired speed of delivery of the desired/ordered goods/items, a desired price for the desired/ordered goods/items, a desired price range for the desired/ordered goods/items, grouping or non-grouping of the desired/ordered goods/items or the preferred type of transport network or transportation.

The ranking engine device is further configured to perform the assignment under consideration of the data submitted by the constraints processing engine device to the ranking engine device.

According to another embodiment of the present invention, the data retrieval device is further configured to gather data from the at least one goods consumer on at least one of the following: order of goods, desired delivery date, grouping or non-grouping of ordered items, desired delivery speed, location of the consumer.

According to another embodiment of the present invention, the order of goods of the at least one goods consumer can be split in one or more partial orders. Therefore, every partial order can be considered by the system and particularly the ranking engine device as an individual order. In other words, the ranking engine device may generate ranking information comprising ordered lists as mentioned above, wherein every ordered list relates to one of the one or more partial orders. As a consequence, a partial order of the order of goods may be provided and delivered by at least one particular goods provider, at least one particular parcel provider and at least one particular transport network provider, and another partial order of the order of goods may be provided and delivered by at least another one particular goods provider, at least another one particular parcel provider and at least another one particular transport network provider. It is understood, that there can be an overlap of the goods provider, the parcel provider and the candidate transport network provider for different partial orders.

In addition, a single order or a partial order can be provided by different goods providers, parcel providers and transport network providers. For example, a first parcel provider can take a first part of a delivery, e.g. by airplane, a second parcel provider can take the second part of the delivery, e.g. by train, and a third parcel provider can take the third part of the delivery, e.g. by truck. The ranking engine device is further configured to perform the assignment according to the one or more partial orders.

According to another embodiment of the invention, the system further comprises a prediction engine device, wherein the prediction engine device is configured to predict the status and/or utilization of at least one of the following: the at least one goods provider, the at least one parcel provider, the at least one transport network provider, the at least one intermediate storage provider or the at least one meta-information provider under consideration of the data submitted by the data retrieval device to the prediction engine device. The ranking engine device is further configured to perform the assignment under consideration of the data submitted by the prediction engine device to the ranking engine device.

According to another embodiment, the system further comprises a price estimator device configured to estimate the cost of at least one transportation of goods from the at least one goods provider to the at least one goods consumer. The price estimator device may have access to a price database which may incorporate the current and/or planned prices and cost for transportation and/or usage of transport networks, e.g. the toll for usage for motorways in different countries, related to a plurality of goods providers and/or parcel providers and/or transport network providers. The ranking engine device is further configured to perform the assignment under consideration of the data submitted by the price estimator device to the ranking engine device.

According to another embodiment, the prediction engine device is further configured to predict the status and/or utilization of at least one of the following: the at least one goods provider, the at least one parcel provider, the at least one transport network provider, the at least one intermediate storage provider or the at least one meta-information provider under consideration of the data submitted by the price estimator device to the prediction engine device.

According to another embodiment, the system further comprises a filter configured to filter the data gathered by the data retrieval device. A filter may comprise means for filtering out data irrelevant for assigning at least one goods consumer to at least one goods provider. In addition, the filter is configured so that any irrelevant data may not be eventually stored and further processed. In other words, the filter can reduce the data gathered by the data retrieval device. The filter may also make certain data anonymous, e.g. personal consumer data which for example for legal reasons may not be allowed to be stored in clear form. In addition the filter can preprocess redundant and/or irrelevant data. The preprocessing of redundant and/or irrelevant data may be used for enhancement of efficiency.

According to another embodiment, the system further comprises an aggregation device configured to aggregate the data gathered by the data retrieval device. An aggregator may comprise means for combining data details which are relevant only on aggregate levels

The filter and aggregation components can serve three purposes either separately or combined: (1) data reduction, (2) preprocessing, and (3) anonymization. (1) Filtering out irrelevant data for storage and processing is an important possible way to improve performance and make efficient use of the resources of the device; similarly, data details can be aggregated earlier, e.g. computation of averages. (2) Another reason can be to preprocess data for faster use later (e.g., precompute certain intermediate results repeatedly used by the ranking engine), or to bring the data into a specific format. Also, the preprocessing can correlate the data to each other when they come from different data sources. (3) Anonymization can be important, e.g., if for legal reasons, storing personalized data is not allowed: fields such as matriculation numbers, names, or associations with places, are removed, or names are decoupled from data.

According to another embodiment, the data gathered from the at least one goods provider by the data retrieval device comprises data on at least one of the following: production capacity, storage capacity, produced goods, stored goods, location of the production site and/or the storage. The data gathered from the at least one parcel provider by the data retrieval device may comprise data on at least one of the following: delivery type, delivery capacity, delivery speed, and delivery cost.

According to another embodiment, the data on the at least one transport network provider comprises data on at least one of the following: goods transportation capacity, goods transportation speed, possible congestion of transport network, current utilization of transport network and goods transportation cost, wherein the data on the at least one intermediate storage provider comprises data on at least one of the following: current storage, current storage capacity, storage cost, and location of the storage.

According to another embodiment, the system further comprises a data storage device configured to store the data retrieved by the data retrieval device.

According to another embodiment, the system further comprises a control device (109) being configured to send one or more control commands to selected goods provider (410, 420) and/or selected parcel provider (600) and/or selected transport network provider (500).

The one or more control commands sent by the routing device (109) to the selected goods provider (410, 420) preferably can comprise a command that a desired/ordered good may be prepared for shipment.

The one or more control commands sent by the routing device (109) to the selected parcel provider (600) preferably can comprise a command that a desired/ordered good should be picked-up at the goods provider's site at a certain time and/or should be shipped to its destination, the consumer's place/site.

The one or more control commands sent by the routing device (109) to the selected transport network provider (500) preferably can comprise a command and/or a request for allowance to use its transport network.

The present invention also relates to a system for joint optimization of warehouse availability and/or goods availability and/or transport network capacity using a system for assigning at least one goods consumer to at least one goods provider preferably using any of the aforementioned systems.

The invention relates to an information system for logistics that allows to improve the assignment of customer requests to stocks and warehouses by taking into account information from various stakeholder and roles, and by jointly optimizing good availability and transportation and delivery costs. Moreover, the information system acilitates informed decisions on where to satisfy consumer requests in the sense that not only good availabilities in warehouses are tracked but also delivery costs (e.g., rail or truck delivery), depending on the current transport network cost (e.g., traffic jams, transportation costs), supply/demand statistical data, meta data (e.g., weather), the type of the source of warehouses and transport, the distance of the customer from the production or warehouse point or the energy costs. Therefore, the system achieves optimal assignment (with respect to criteria indicated by system users, e.g. a joint optimization of goods availability and transport cost) of customers.

The present invention also relates to a system that performs assignment of consumers (e.g., customers shopping items via an online portal) to warehouses, stock locations or production factories while taking into account transportation cost. Moreover, existing systems consider multiple sites from which they can deliver items from. However, the system relating to the present invention offers a choice of where to deliver items from by not only taking into account warehouse availabilities, but also transportation costs and delivery network state (e.g., road and weather conditions).

The invention takes information from many sources and providers (e.g., customers and shops, transportation and mail delivery companies, warehouse operators, weather forecast stations, road traffic information providers, etc.) to assist an optimal assignment of consumers to warehouses or other goods providers. This assignment is done according to user-specified criteria, e.g., jointly optimizing good availability, consumer preferences, energy, or transport costs (maybe even along multiple paths in parallel), as well as transport network capacity constraints.

The invention takes into consideration the multifaceted needs of users in real time, as well as the production of goods from all the factories, the capacity and state of the delivery network, the location of the possibly even mobile user, as well as meta-information such as the weather and the price of energy per unit.

### BRIEF DESCRIPTION OF THE DRAWINGS

Fig. 1 shows a schematic diagram of a system for assigning at least one goods consumer to at least one goods provider and the relevant input data to the system according to an embodiment of the invention; and
Fig. 2 shows a schematic diagram of a system for assigning at least one goods consumer to at least one goods provider according to another embodiment of the invention.

### DETAILED DESCRIPTION OF THE INVENTION

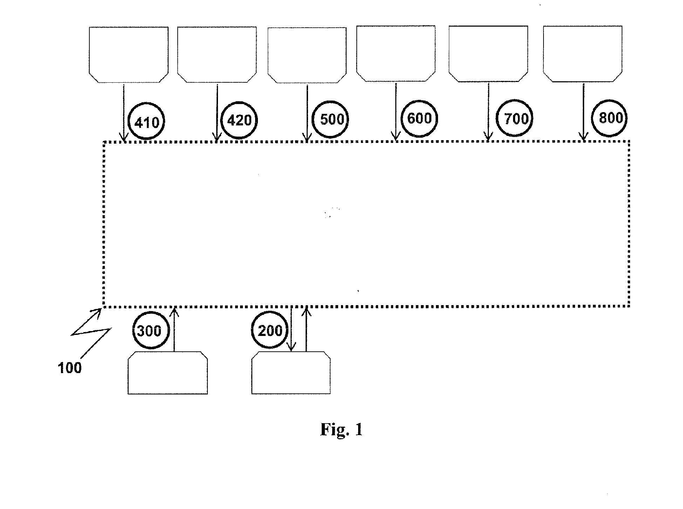

Fig. 1 shows a schematic diagram of a system (100) for assigning at least one goods consumer to at least one goods provider and the relevant input data of the system (100) according to an embodiment of the invention.

The goods consumer (300) provides data related to the information of the ordered goods or items, e.g. a book, or the goods or items they desire to order to the system (100). The goods consumer (300) may also specify the desired delivery date, the desired delivery speed, the grouping or non-grouping of ordered items, the location of the consumer (300) or the preferred type of transport network, e.g. train network may be preferred before road network for ecological reasons.

In addition the system (100) also requests and/or retrieves data from the energy provider (410, 420), comprising at least one production provider (410) and/or at least one storage provider (420). The production provider (410) can be a producer of goods or an importer of goods or a distributer of goods. The storage provider (420) can have one or more storage facilities for storing goods. The data can comprise the production capacity of the production provider (410), the storage capacity of the production provider (410) or the storage provider (420), the produced goods, the stored goods, the location of the production site of the production provider (410) or the storage of the production provider (410) or the storage provider (420). The request and/or retrieval of data from the goods provider (410, 420) can be performed on a regular basis, i.e. it may vary in time for example from seconds to minutes depending on the agreement between the goods providers (410, 420) and the operator of the system (200). Alternatively, the request and/or retrieval of data from the goods provider (410, 420) can be performed on request only. The communication between the system (100) and the goods providers (410, 420) can be either on a pull- or push- basis.

Another input data of the system (100) is the data requested and/or retrieved from the parcel provider (600). The parcel provider (600) can be a logistics company which can be specialized in transportation and shipment of various goods. The data gathered by the system (100) from the parcel provider (600) can be related to the delivery type, the delivery capacity, the delivery speed, and the delivery cost.

The system (100) also requests and/or retrieves data as another input data from the transport network provider (500). The transport network provider (500) is a company that operates and maintains a transport network as for example a rail network or a road network or e.g. a water channel. Thus, the transport network provider (500) can be a railway company or a road networks company. The data gathered by the system (100) from the transport network provider (500) can be related to goods transportation capacity, goods transportation speed, possible congestion of transport network, current utilization of transport network and goods transportation cost.

A further input data of the system is data provided by the intermediate storage provider (700). The intermediate storage provider (700) can operate and maintain one or more goods storage for intermediate and/or temporary use, e.g. in the cargo area of an airport or in the cargo area of a harbor. As a consequence, the data gathered by the system (100) from the intermediate storage provider (700) can be related to the current storage of the intermediate storage provider (700), the current storage capacity of the intermediate storage provider (700), the storage cost, and the location of the storage of the intermediate storage provider (700).

Another input data of the system are data provided by meta-information providers (800) related to the weather - e.g. current and expected weather conditions - , related to the car and public transportation traffic, related to the latest news - e.g. major sports events or important political speeches, or related to current and expected price of fossil fuels as petroleum for example. Meta-information providers (800) are therefore weather forecasters, news feeds, news networks or goods and first source exchange information portals. The data can be retrieved automatically either using a pull mechanism or a push mechanisms from the Meta-information providers (800), e.g., by RSS (rich site summary).

After the system (100) has taken into account all input data, it makes a prediction of triples of goods consumer (300) - candidate goods provider (410, 420) - candidate parcel provider (600) and additionally gives a ranking of the best matched triples in an ordered fashion. Preferably, the system (100) makes a prediction of quadruples of goods consumer (300) - candidate goods provider (410, 420) - candidate parcel provider (600) - candidate transport network providers (5009 and additionally gives a ranking of the best matched quadruples in an ordered fashion. Consequently the system (100) outputs different options to the user (200) of the system (100) according to the ranking. The system user (200) can manually select the best matched triple or the best matched quadruple, or the system user (200) can rely on an automated matching algorithm performed by the system (100). With the automated matching algorithm enabled, the consumer (300) is automatically assigned to the best choice according to best matched triple with the highest score to the goods provider (410, 420) and the parcel provider (600), in case the system (100) makes a prediction of triples. With the automated matching algorithm enabled, the consumer (300) is automatically assigned to the best choice according to best matched quadruple with the highest score to the goods provider (410, 420), the parcel provider (600) and the transport network provider (500), in case the system (100) makes a prediction of quadruples. A receipt of the assignment is also sent back to the user (200).

The system can also report to the user (200) which goods consumer (300) is assigned to each goods provider (410, 420) for billing and operational reasons.

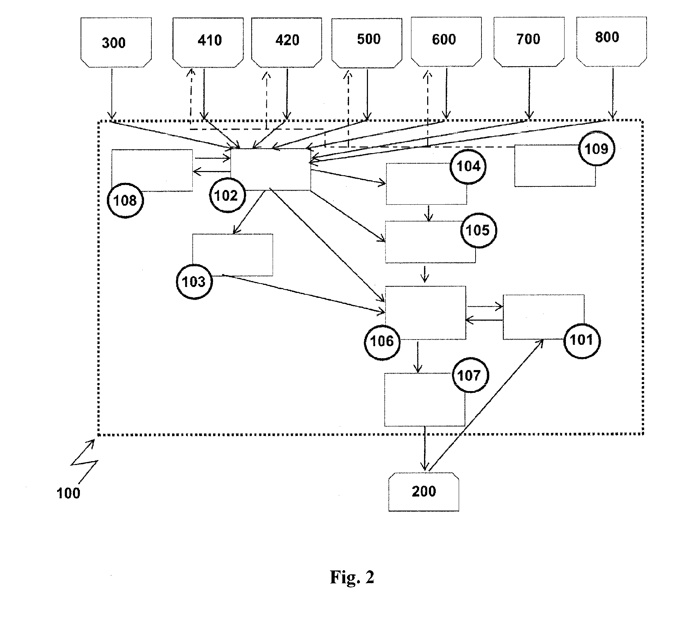

Fig. 2 shows a schematic diagram of a system (100) for assigning at least one goods consumer (300) to at least one goods provider (410, 420) according to another embodiment of the invention.

The user (200) queries the system (100) and specifies constraints. The constraints are retrieved by the constraints processing engine device (101). Constraints may comprise a pre-specified selection of specific candidate goods provider (410, 420) and/or candidate parcel provider (600) and/or candidate transport network provider (500). This pre-specified selection may be dependent on the time of the day or the year, e.g. certain providers are preferred in the morning or at peak hours or at Christmas time, or other time conditions. Another constraint may depend on the location of the goods consumer (410, 420), i.e. that the location of the goods consumer falls within a preferred allocated area of a certain parcel provider (410, 420) and/or transport network provider (500). Another constraint may be that the location of the goods consumer (300) falls within an area where other goods consumer may order/desire similar goods or order their goods from the same goods provider (410, 420). Another constraint may comprise at least one of the following: a desired time or date of delivery of the desired/ordered good, a desired speed of delivery of the desired/ordered goods/items, a desired price for the desired/ordered goods/items, a desired price range for the desired/ordered goods/items, grouping or non-grouping of the desired/ordered goods/items or the preferred type of transport network. Alternatively, the constraints processing engine device (101) can be omitted and default constraints can substitute user constraints.

As mentioned before, the consumers (300) provide information of the ordered goods or items, e.g. a book, or the goods or items they desire to order the system (100). The goods consumer (300) may also specify the desired delivery date, the desired delivery speed, the grouping or non-grouping of ordered items, the location of the consumer (300) or the preferred type of transport network, e.g. train network may be preferred before road network for ecological reasons.

The information of the consumer (300) is received by the data retrieval device (102). In addition all the aforementioned other input data from the goods provider (410, 420), the parcel provider (600), the transport network provider (500), the intermediate storage provider (700) and the meta-information providers (800) is gathered from the data retrieval device (102). In case the interfaces for the input data are not reporting correctly or in case of failure a data storage device (108) acts as a backup system. The data storage device (108) is regularly updated and also maintains the logs of all deliveries and decisions for billing, troubleshooting and maintenance.

When all the aforementioned other input data is gathered from the data retrieval device, the data is sent to a filter (104). The filter (104) can comprise means for filtering out data irrelevant for assigning the goods consumer (300) to the goods provider (410, 420). In addition, the filter (104) is configured so that any irrelevant data may not be eventually stored and further processed. Hence, the filter (104) can reduce the data gathered by the data retrieval device (102). The filter (104) may also make certain data anonymous, e.g. personal consumer data which may not allowed to be stored in clear form. In addition the filter (104) can preprocess redundant and/or irrelevant data. The preprocessing of redundant and/or irrelevant data may be used for enhancement of efficiency.

The filtered data is subsequently sent to an aggregator (105). Alternatively, the filter (104) can be omitted and the data from the data retrieval device (102) is directly sent to the aggregator (105). The aggregator (105) aggregates the data gathered by the data retrieval device. The aggregator may comprise means for combining data details which are relevant only on aggregate levels. Then, the aggregated data is sent to the ranking engine device (106). Alternatively, the aggregation of the data can be omitted and the data can directly be sent from the data retrieval device (102) or the filter (104) to the ranking engine device (106).

In addition, the prediction engine device (103) predicts the status and/or utilization of at least one of the following: the at least one goods provider (410, 420), the at least one parcel provider (600), the at least one transport network provider (500), the at least one intermediate storage provider (700) or the at least one meta-information provider (800) under consideration of the data submitted by the data retrieval device (102) to the prediction engine device (103). The prediction engine device (103) sends the result data to the ranking engine device (106).

The ranking engine device (106) ranks triples of goods consumer (300) and candidate goods provider (410, 420) and candidate parcel providers (600) or quadruples of goods consumer (300), candidate goods provider (410, 420), candidate parcel providers (600) and candidate transport network providers (500). The ranking engine device (106) can also perform the assignment under consideration of the data submitted by the prediction engine device (103).

Then the ranking engine device (106) sends the ranking information in case of triples to the candidate goods provider (410, 420) and the candidate parcel provider (600) and in case of quadruples to triples to the candidate goods provider (410, 420) and the candidate parcel provider (600) and the candidate transport network provider (500).

In case that the response from the first ranked candidate goods provider (410, 420) and first ranked candidate parcel provider (600) and/or first ranked candidate transport network provider (500) is negative, the ranking engine device (106) is further configured to send the ranking information to the second ranked candidate goods provider (410, 420) and second ranked candidate parcel provider (600) and/or second ranked candidate transport network provider (500) which are second most suitable and to receive respective response. In case of a further negative response the ranking engine device is configured to subsequently send ranking information to the next ranked candidate goods provider (410, 420) and next ranked candidate parcel provider (600) and/or next ranked candidate transport network provider (500) in the ranking information until positive response (confirmation) is sent back.

The confirmation is sent to a price estimator device (107) which estimates the cost of the transportation/delivery of ordered goods from the selected goods provider (410, 420) to the goods consumer (300). The price estimator device (107) may have access to a price database which may incorporate the current and/or planned prices and cost for transportation and/or usage of transport networks, e.g. the toll for usage for motorways in different countries.

The confirmation is send along with the price estimate to the user (200). If the user (200) has activated the automatic matching device of the system (100) (not shown) then the confirmation is automatically approved. The user (200) can also manually approve the selection or even request for a new selection by sending a revised request to the system (100). Until the user (200) approves the request, the assignment transaction is not complete.

The system (100) additionally comprises a control device (109). The control device (109) is configured to send control commands to the selected goods provider (410, 420), the selected parcel provider (600) and/or the selected transport network provider (500) as can be seen by the dash-dotted arrows in Fig. 2. The control commands sent by the routing device (109) to the selected goods provider (410, 420) can comprise a command that a desired/ordered good may be prepared for shipment. The control commands sent by the routing device (109) to the selected parcel provider (600) can comprise a command that a desired/ordered good should be picked-up at the goods provider's site at a certain time and should be shipped to its destination, the consumer's place/site. The control command sent by the routing device (109) to the selected transport network provider (500) can comprise a command and/or request for allowance to use its transport network. By sending the commands to the selected goods provider (410, 420), the selected parcel provider (600) and/or the selected transport network provider (500), the control device (109) can control the shipment/delivery of goods through a plurality of transport networks. In particular, the control device (109) can control the delivery of goods through a plurality of transport networks in parallel.

While the invention has been illustrated and described in detail in the drawings and foregoing description, such illustration and description are to be considered illustrative or exemplary and non-restrictive; the invention is thus not limited to the disclosed embodiments. Variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality and may mean "at least one".

## Claims

1. A system (100) for assigning at least one goods consumer (300) to at least one goods provider comprising:
a data retrieval device (102), wherein the data retrieval device (102) is configured to gather continuously or in time intervals data from the at least one goods consumer (300) and/or from the at least one goods provider comprising at least one production provider (410) and/or at least one storage provider (420) and/or from at least one parcel provider (600) and/or from at least one transport network provider (500) and/or from at least one intermediate storage provider (700) and/or from at least one meta-information provider (800); and
a ranking engine device (106), wherein the ranking engine device (106) is configured to rank triples of goods consumer (300) and at least one candidate goods provider and at least one candidate parcel provider (600) or quadruple of goods consumer (300) and at least one candidate goods provider and at least one candidate parcel provider (600) and
at least one candidate transport network provider (500) under consideration of the data gathered by the data retrieval device (102).

2. The system according to claim 1, wherein the ranking engine device (106) is configured to send the ranking information to the candidate goods provider and/or candidate parcel provider (600) and/or candidate transport network provider (500), and is configured to receive the response from the candidate goods provider and/or candidate parcel provider (600) and/or candidate transport network provider (500), and is further configured to send the confirmation from to the candidate goods provider and/or candidate parcel provider (600) and/or candidate transport network provider (500) to a user (200), and is further configured to assign the candidate goods provider and/or candidate parcel provider (600) and/or candidate transport network provider (500) to the at least one goods consumer (300) according to a users selection of the candidate goods provider and/or candidate parcel provider (600) and/or candidate transport network provider (500) based on the ranking information.

3. The system (100) according to claim 1 or 2, further comprising a constraints processing engine device (101) configured to retrieve data from a/the system user (200) on at least one constraint and/or one ranking preference and/or one ranking algorithm and configured to submit the data to the ranking engine device (106); and
wherein the ranking engine device (106) is further configured to perform the assignment under consideration of the data submitted by the constraints processing engine device (101) to the ranking engine device (106).

4. The system (100) according to claim 3, wherein the data on at least one constraint comprises at least one of the following: desired delivery date, grouping or non-grouping of ordered items, desired delivery speed, desired price of the ordered items, desired price range of the ordered items.

5. The system (100) according to any of claims 1 to 4, wherein the data retrieval device (102) is further configured to gather data from the at least one goods consumer (300) on at least one of the following: order of goods, desired delivery date, grouping or non-grouping of ordered items, desired delivery speed, location of the consumer (300), preferred type of transport network (600).

6. The system (100) of any of claim 5, wherein the order of goods of the at least one goods consumer (300) can be split in one or more partial orders; and
wherein the ranking engine device (106) is further configured to perform the assignment according to the one or more partial orders.

7. The system (100) of any of claims 1 to 6, further comprising a prediction engine device (103), wherein the prediction engine device (103) is configured to predict the status and/or utilization of at least one of the following: the at least one goods provider, the at least one parcel provider (600), the at least one transport network provider (500), the at least one intermediate storage provider (700) or the at least one meta-information provider (800) under consideration of the data submitted by the data retrieval device (102) to the prediction engine device (103); and
wherein the ranking engine device (106) is further configured to perform the assignment under consideration of the data submitted by the prediction engine device (103) to the ranking engine device (106).

8. The system (100) of any of claims 1 to 7, further comprising a price estimator device (107) configured to estimate the cost of at least one transportation of goods from the at least one goods provider to the at least one goods consumer (300); and
wherein the ranking engine device (106) is further configured to perform the assignment under consideration of the data submitted by the price estimator device (107) to the ranking engine device (106).

9. The system (100) of claim 8, wherein the prediction engine device (103) is further configured to predict the status and/or utilization of at least one of the following: the at least one goods provider, the at least one parcel provider (600), the at least one transport network provider (500), the at least one intermediate storage provider (700) or the at least one meta-information provider (800) under consideration of the data submitted by the price estimator device (107) to the prediction engine device (103).

10. The system (100) of any of claims 1 to 9, further comprising a filter (104) configured to filter (104) the data gathered by the data retrieval device (102), and/or further comprising an aggregation device (105) configured to aggregate the data gathered by the data retrieval device (102).

11. The system (100) of any of claims 1 to 10, wherein the data gathered from the at least one goods provider by the data retrieval device (102) comprises data on at least one of the following: production capacity, storage capacity, produced goods, stored goods, location of the production site and/or the storage; and/or
wherein the data gathered from the at least one parcel provider (600) by the data retrieval device (102) comprises data on at least one of the following: delivery type, delivery capacity, delivery speed, and delivery cost.

12. The system (100) of any of claims 1 to 11, wherein the data on the at least one transport network provider (500) comprises data on at least one of the following: goods transportation capacity, goods transportation speed, possible congestion of transport network, current utilization of transport network and goods transportation cost; and/or wherein the data on the at least one intermediate storage provider (700) comprises data on at least one of the following: current storage, current storage capacity, storage cost, and location of the storage.

13. The system (100) of any of claims 1 to 12, further comprising a data storage device (108) configured to store the data retrieved by the data retrieval device (102).

14. The system (100) of any of claims 1 to 13, further comprising a control device (109) being configured to send one or more control commands to selected goods provider (410, 420) and/or selected parcel provider (600) and/or selected transport network provider (500),
wherein the control commands sent by the routing device (109) to the selected goods provider (410, 420) preferably can comprise a command that a desired/ordered good may be prepared for shipment, and/or
wherein the control commands sent by the routing device (109) to the selected parcel provider (600) preferably can comprise a command that a desired/ordered good should be picked-up at the goods provider's site at a certain time and/or should be shipped to the consumer's place or site, and/or
wherein the control commands sent by the routing device (109) to the selected transport network provider (500) preferably can comprise a command and/or a request for allowance to use its transport network.

15. A system for joint optimization of warehouse availability and/or goods availability and/or transport network capacity using a system for assigning at least one goods consumer (300) to at least one goods provider preferably according to any of claims 1 to 14.

## Amended claims

### Amended claims in accordance with Rule 137(2) EPC.

**1.** A system (100) for assigning at least one goods consumer (300) to at least one goods provider comprising:
a data retrieval device (102), wherein the data retrieval device (102) is configured to gather continuously or in time intervals data from the at least one goods consumer (300) and/or from the at least one goods provider comprising at least one production provider (410) and/or at least one storage provider (420) and/or from at least one parcel provider (600) and/or from at least one transport network provider (500) and/or from at least one intermediate storage provider (700) and/or from at least one meta-information provider (800); and
a ranking engine device (106), wherein the ranking engine device (106) is configured to rank triples of goods consumer (300) and at least one candidate goods provider and at least one candidate parcel provider (600) or quadruple of goods consumer (300) and at least one candidate goods provider and at least one candidate parcel provider (600) and
at least one candidate transport network provider (500) under consideration of the data gathered by the data retrieval device (102).

**2.** The system according to claim 1, wherein the ranking engine device (106) is configured to send the ranking information to the candidate goods provider and/or candidate parcel provider (600) and/or candidate transport network provider (500), and is configured to receive the response from the candidate goods provider and/or candidate parcel provider (600) and/or candidate transport network provider (500), and is further configured to send the confirmation from to the candidate goods provider and/or candidate parcel provider (600) and/or candidate transport network provider (500) to a user (200), and is further configured to assign the candidate goods provider and/or candidate parcel provider (600) and/or candidate transport network provider (500) to the at least one goods consumer (300) according to a users selection of the candidate goods provider and/or candidate parcel provider (600) and/or candidate transport network provider (500) based on the ranking information.

**3.** The system (100) according to claim 1 or 2, further comprising a constraints processing engine device (101) configured to retrieve data from a/the system user (200) on at least
one constraint and/or one ranking preference and/or one ranking algorithm and configured to submit the data to the ranking engine device (106); and
wherein the ranking engine device (106) is further configured to perform the assignment under consideration of the data submitted by the constraints processing engine device (101) to the ranking engine device (106).

**4.** The system (100) according to claim 3, wherein the data on at least one constraint comprises at least one of the following: desired delivery date, grouping or non-grouping of ordered items, desired delivery speed, desired price of the ordered items, desired price range of the ordered items.

**5.** The system (100) according to any of claims 1 to 4, wherein the data retrieval device (102) is further configured to gather data from the at least one goods consumer (300) on at least one of the following: order of goods, desired delivery date, grouping or non-grouping of ordered items, desired delivery speed, location of the consumer (300), preferred type of transport network (600).

**6.** The system (100) of any of claim 5, wherein the order of goods of the at least one goods consumer (300) can be split in one or more partial orders; and
wherein the ranking engine device (106) is further configured to perform the assignment according to the one or more partial orders.

**7.** The system (100) of any of claims 1 to 6, further comprising a prediction engine device (103), wherein the prediction engine device (103) is configured to predict the status and/or utilization of at least one of the following: the at least one goods provider, the at least one parcel provider (600), the at least one transport network provider (500), the at least one intermediate storage provider (700) or the at least one meta-information provider (800) under consideration of the data submitted by the data retrieval device (102) to the prediction engine device (103); and
wherein the ranking engine device (106) is further configured to perform the assignment under consideration of the data submitted by the prediction engine device (103) to the ranking engine device (106).

**8.** The system (100) of any of claims 1 to 7, further comprising a price estimator device (107) configured to estimate the cost of at least one transportation of goods from the at least one goods provider to the at least one goods consumer (300); and
wherein the ranking engine device (106) is further configured to perform the assignment under consideration of the data submitted by the price estimator device (107) to the ranking engine device (106).

**9.** The system (100) of claim 8, wherein the prediction engine device (103) is further configured to predict the status and/or utilization of at least one of the following: the at least one goods provider, the at least one parcel provider (600), the at least one transport network provider (500), the at least one intermediate storage provider (700) or the at least one meta-information provider (800) under consideration of the data submitted by the price estimator device (107) to the prediction engine device (103).

**10.** The system (100) of any of claims 1 to 9, further comprising a filter (104) configured to filter (104) the data gathered by the data retrieval device (102), and/or further comprising an aggregation device (105) configured to aggregate the data gathered by the data retrieval device (102).

**11.** The system (100) of any of claims 1 to 10, wherein the data gathered from the at least one goods provider by the data retrieval device (102) comprises data on at least one of the following: production capacity, storage capacity, produced goods, stored goods, location of the production site and/or the storage; and/or
wherein the data gathered from the at least one parcel provider (600) by the data retrieval device (102) comprises data on at least one of the following: delivery type, delivery capacity, delivery speed, and delivery cost.

**12.** The system (100) of any of claims 1 to 11, wherein the data on the at least one transport network provider (500) comprises data on at least one of the following: goods transportation capacity, goods transportation speed, possible congestion of transport network, current utilization of transport network and goods transportation cost; and/or wherein the data on the at least one intermediate storage provider (700) comprises data on at least one of the following: current storage, current storage capacity, storage cost, and location of the storage.

**13.** The system (100) of any of claims 1 to 12, further comprising a data storage device (108) configured to store the data retrieved by the data retrieval device (102).

**14.** The system (100) of any of claims 1 to 13, further comprising a control device (109) being configured to send one or more control commands to selected goods provider (410, 420) and/or selected parcel provider (600) and/or selected transport network provider (500),
wherein the control commands sent by the control device (109) to the selected goods provider (410, 420) preferably can comprise a command that a desired/ordered good may be prepared for shipment, and/or
wherein the control commands sent by the control device (109) to the selected parcel provider (600) preferably can comprise a command that a desired/ordered good should be picked-up at the goods provider's site at a certain time and/or should be shipped to the consumer's place or site, and/or
wherein the control commands sent by the control device (109) to the selected transport network provider (500) preferably can comprise a command and/or a request for allowance to use its transport network.

**15.** A system for joint optimization of warehouse availability and/or goods availability and/or transport network capacity using a system for assigning at least one goods consumer (300) to at least one goods provider according to any of claims 1 to 14.
